# EUROPÄISCHE PATENTANMELDUNG

(11) **EP 0 704 691 A2**
(43) Veröffentlichungstag der Anmeldung: **03.04.1996**
(21) Anmeldenummer: 94120793.8
(22) Anmeldetag: 28.12.1994
(51) Int. Cl.: G01N 21/35

(54) **Infrarotspektrometrischer Sensor für Gase**

(30) Priorität: 29.09.1994 DE 4434814
(71) Anmelder: MICROPARTS GESELLSCHAFT FÜR MIKROSTRUKTURTECHNIK mbH, D-44227 Dortmund (DE)
(72) Erfinder: Peters, Ralf-Peter, Dr., D-51467 Bergisch-Gladbach (DE); Rogner, Arnd, Dr., D-45549 Sprockhövel (DE); Ünal, Nezih, D-44227 Dortmund (DE); Heinrich, Lothar, Dr., D-48165 Münster (DE); Landwehr, Dierk, Dr., D-48249 Dülmen (DE); Auf der Heyde, Wolfgang, Dr., D-45721 Haltern (DE)

(57) **Zusammenfassung**

Gase lassen sich wegen ihrer gasspezifischen Absorption im infraroten Spektralbereich mittels eines Spektrometers selektiv nachweisen. Die bekannten Geräte liefern zwar recht genaue Ergebnisse, sie sind jedoch im allgemeinen teuer, von beachtlicher Größe und stellen erhöhte Anforderungen an die Bedienung und Wartung.

Für die kontinuierliche Überwachung eines Gasstromes oder eines Gasraumes wird ein spektrometrischer Sensor angegeben, der aus einem als Mikrostrukturkörper hergestellten einstückigen Formteil besteht. Der Raum zwischen Spiegelgitter und Eintritts- bzw. Austrittsspalt für die IR-Strahlung enthält das nachzuweisende Gas. Der Sensor ist kompakt und robust; er ist auch für transportable Geräte geeignet. Er läßt sich in großer Stückzahl kostengünstig herstellen und ist in Metall-Ausführung auch bei erhöhter Temperatur einsetzbar.

Mit dem neuen Sensor kann man die Sicherheit von Anlagen, in denen brennbare, giftige oder andere Gase enthalten sind oder auftreten können, auf wirtschaftliche Weise erhöhen.

## Beschreibung

Die Erfindung betrifft einen Sensor für Gase, mit dem das Gas über seine Absorption im infraroten (IR-)Spektralbereich nachgewiesen wird.

Die Erfindung bezweckt, einen derartigen Sensor in großen Stückzahlen wirtschaftlich und mit verbesserten Eigenschaften herzustellen.

Gase absorbieren entsprechend ihrer Molekularstruktur Strahlung im Wellenlängenbereich von einigen 100 Nanometern bis einigen Mikrometern (entsprechend dem Wellenzahlbereich von einigen 10⁴ cm⁻¹ bis einigen 10³ cm⁻¹). Anhand seines typischen Absorptionsspektrums kann das Gas identifiziert werden. Hierauf beruht die qualitative oder quantitative Absorptionsspektralanalyse von Gasen und Gasgemischen.

Für die Absorptions-Spektralanalyse gibt es die bekannten für den IR-Bereich ausgelegten Spektralapparate, bei denen die polyfrequente Strahlung durch ein Prisma oder ein Durchlaßgitter oder ein Reflexionsgitter zerlegt wird. Mit diesen Geräten lassen sich sehr unterschiedliche und komplexe Fragestellungen bearbeiten und exakte Ergebnisse erhalten. Die Geräte haben jedoch eine beachtliche Größe, sie sind im allgemeinen nur stationär einsetzbar und vergleichsweise teuer. Zum Durchstimmen eines kompletten Spektrums sind in der Regel lange Meßzeiten erforderlich. Sie verlangen eine sorgfältige Behandlung und Handhabung und lassen sich in der Regel nur durch geschultes Personal bedienen. Deshalb ist bisher zum Beispiel die ständige Überwachung eines Gasgemisches auf eine vorgegebene Komponente, die ggf. nur sporadisch auftritt, mittels eines der bekannten Spektralapparate auf spezielle Fälle beschränkt.

Zum Nachweisen eines bestimmten Gases genügt im allgemeinen das Ausblenden eines schmalen Wellenlängenfensters, was mit Hilfe eines Interferenzfilters realisiert werden kann. Mit derartigen Sensoren kann jedoch nur das bestimmte Gas nachgewiesen werden. Eine Referenzwellenlänge zum Eliminieren äußerer Einflüsse kann nicht verwendet werden. Die Herstellung schmalbandiger Interferenzfilter ist recht aufwendig. Die Kennlinie solcher Filter ist stark von der Temperatur abhängig.

Oxidierbare Gase, z. B. Erdgas, werden mit Sensoren nachgewiesen, bei denen einer Metalloxid-Halbleiterschicht Sauerstoff entzogen wird, wodurch sich die Leitfähigkeit der Halbleiterschicht erhöht. Diese Sensoren reagieren auf unterschiedliche gleichzeitig anwesende oxidierbare Gase in gleicher Weise, sie sind also nicht gasspezifisch. Sie zeigen eine Langzeitdrift und werden durch Begasen mit Sauerstoff regelmäßig regeneriert. Ähnliches gilt für Pellistoren, die aus einem mit einem Katalysator beschichteten keramischen Träger bestehen.

Bei elektrochemischen Sensoren werden durch das in die Sensoren eindringende Gas Ionen gebildet, wodurch die Sensorspannung geändert wird. Diese Sensoren haben zwar eine ausreichende Selektivität, sie können jedoch nur für spezielle Gase verwendet werden. Sie sind in einem begrenzten Temperaturbereich einsetzbar, und ihre Lebensdauer ist auf wenige Jahre beschränkt.

Damit entsteht die Aufgabe, einen Sensor zu finden, mit dem Gase selektiv nachgewiesen werden können, der kostengünstig in großer Stückzahl hergestellt werden kann und der für den Langzeitbetrieb geeignet ist.

Die Aufgabe wird erfindungsgemäß gelöst durch einen IR-spektrometrischen Gassensor mit folgenden kennzeichnenden Merkmalen:
- ein als Mikrostrukturkörper hergestelltes einstückiges Formteil, das aus einer Grundplatte, einem Spiegelgitter und einem Anschluß zum Einkoppeln von polyfrequenter IR-Strahlung sowie mindestens einem Anschluß zum Auskoppeln monofrequenter IR-Strahlung besteht,
- einen freien Raum, der das zu untersuchende Gas enthält, zwischen dem Spiegelgitter und den Anschlüssen für die IR-Strahlung,
- eine Abdeckplatte über dem freien Raum, die mit dem Formteil dicht verbunden ist,
- Öffnungen zum Ein- und Ausleiten des Gases in den bzw. aus dem freien Raum.

Das Spiegelgitter ist ein konkaves Reflexionsgitter, bevorzugt ein konkaves Echelettegitter mit angepaßtem Blazewinkel; damit erscheint der größte Teil der Strahlung in einer gewünschten Beugungsordnung, z. B. in der ersten Ordnung, auf nur einer Seite der Gitternormalen. Es ist vorteilhaft, das Spiegelgitter sowie die Anschlußstellen für die IR-Strahlung auf dem Rowland-Kreis anzuordnen; diese Anordnung ist selbstfokussierend. Für manche Anwendungsfälle ist es hinreichend oder zweckmäßig, anstelle des Rowland-Kreises eine in der Nähe dieses Kreises liegende Kurve zu wählen.

Der freie Raum ist mit einer Platte abgedeckt, die mit dem Formteil dicht verbunden ist. In diesen bzw. aus diesem Raum wird das zu untersuchende Gas durch Öffnungen ein- und ausgeleitet. Dieser freie Raum dient als Küvettenraum für das zu untersuchende Gas.

Die Wände des freien Raumes sowie die dem freien Raum zugewandte Seite der Abdeckplatte ist ggf. mit einer im benutzten Spektralbereich gut reflektierenden metallenen Schicht bedeckt; dieser Raum dient gleichzeitig als Hohlleiter für die IR-Strahlung.

Das einstückige Formteil kann Anschlußelemente in Form von Spalten, Blenden sowie Haltestrukturen oder Justierstrukturen für die Strahlungsquelle und den Strahlungsempfänger sowie weitere optische Elemente wie Planspiegel, Hohlspiegel, Linsen oder Prismen enthalten, die entweder direkt in das Formteil integriert sind oder in entsprechende Aussparungen im Formteil eingelegt sind. Mittels eines oder mehrerer zylinderischer Hohlspiegel kann der Weg der IR-Strahlung innerhalb des Küvettenraumes verlängert werden, was bei Gasen mit kleinem Extinktionskoeffizienten zweckmäßig ist.

Das einstückige Formteil kann aus Kunststoff, z. B. Polymethylmethacrylat, Polysulfon, Polycarbonat oder aus Metall, z. B. Nickel, Nickel-Kobalt, Gold, Kupfer bestehen.

Die IR-Strahlungsquelle sowie der oder die IR-Strahlungsempfänger können ggf. mittels eines die IR-Strahlung leitenden Lichtwellenleiters an das Formteil angeschlossen sein. Weiter kann das einstückige Formteil mit einem Halbleitersubstrat fest verbunden sein, auf dem eine IR-Strahlungsquelle, ein oder mehrere Strahlungsempfänger und ggf. elektronische Elemente zum Verstärken der Detektorsignale und zum Auswerten des IR-Spektrums angeordnet sind.

Das zu untersuchende Gas kann durch eine Öffnung in den freien Raum eingeleitet und durch eine andere Öffnung ausgeleitet werden. Die Stutzen, durch die ein z. B. unter Druck stehendes Gas dem Sensor zugeführt wird, sind bevorzugt am Sensorgehäuse angebracht. Es kann zweckmäßig sein, die Schmalseiten des freien Raumes ganz offen zu lassen, um freie Konvektion zu ermöglichen. Die Konvektion kann bei angepaßter räumlicher Anordnung des Sensors durch die von der Strahlungsquelle erzeugte Wärme unterstützt werden. Weiter können Vorrichtungen vorgesehen werden, die die Konvektion begünstigen.

Bei staubhaltigen Gasen kann ein Filter in die Zuleitung des Gases gelegt werden. Dieses Filter kann Bestandteil des einstückigen Formteils sein.

Um den Weg der IR-Strahlung innerhalb des Gases zu verlängern, kann in die polyfrequente oder in die monofrequente IR-Strahlung außerhalb des freien Raumes eine Gasküvette oder ein gasgefüllter Hohlleiter eingebracht werden.

Als Strahlungsquelle im Wellenlängenbereich 1 µm bis 10 µm (entsprechend dem Wellenzahlbereich 10⁴ cm⁻¹ bis 10³ cm⁻¹) sind thermische Strahlungsquellen mit breitem Wellenlängenbereich, wie Glühwendeln oder Dünnschichtstrahler geeignet. Strahlungsquellen mit schmalerem Wellenlängenbereich sind Halbleiter-Strahlungsquellen, wie Bleisalz-Laser-Dioden, oder strahlungsemittierende Dioden (LED), wie InAsSbP- oder InGaAs-Dioden. Thermische Strahlungsquellen haben eine relativ hohe Strahlungsstärke; bei Halbleiterstrahlungsquellen kann wegen des begrenzten Wellenlängenbereiches das Empfangen der Strahlung einfacher sein. Der in das Spektrometer eintretende Strahlungsstrom kann durch einen Hohlspiegel hinter der Strahlungsquelle oder durch eine IR-durchlässige Sammellinse vor der Strahlungsquelle erhöht werden.

Geeignete Strahlungsempfänger sind z. B. Thermosäulen, pyroelektrische Empfänger oder Bolometer sowie Fotoleiter und Halbleiterempfänger aus GaAs, PbS oder PbSe. Vor dem Strahlungsempfänger kann ggf. ein Austrittsspalt mit geeigneter Breite angebracht sein.

Bei einem Gassensor, der für nur eine oder wenige Wellenlängen ausgelegt ist, können ein oder wenige Strahlungsempfänger an den Stellen des Formteils angebracht sein, an denen die betrachteten Wellenlängen auftreten. Bei einem Gassensor, mit dem ein breiter Spektralbereich erfaßt werden soll, können die Strahlungsempfänger zeilenartig angeordnet sein.

Die Funktionsweise des erfindungsgemäßen Sensors stimmt mit der Funktionsweise der bekannten Spektrometer grundsätzlich überein. In dem Raum, in dem die IR-Strahlung das zu untersuchende Gas durchstrahlt, schwächt das Gas die seinem Absorptionsspektrum entsprechenden Wellenlängen der eingekoppelten IR-Strahlung, die in dem vom Spiegelgitter erzeugten Spektrum mit kleinerer Amplitude enthalten sind. Die absorbierten Wellenlängen geben die Art des absorbierenden Gases an, die Schwächung dieser Wellenlängen ist ein Maß für die Konzentration des absorbierenden Gases.

Das einstückige Formteil wird als Mikrostrukturkörper hergestellt, z. B. durch Röntgentiefenlithographie, Galvanik und Abformung (LIGA-Verfahren). Mittels einer für Röntgenstrahlung bereichsweise undurchlässigen Maske, die in der Struktur des Formteils strukturiert ist, wird eine auf einer metallenen Grundplatte aufgetragenen Schicht eines Röntgenresists bildmäßig bestrahlt. Die löslich gebliebenen oder löslich gewordenen Bereiche der Resistschicht werden herausgelöst. In den bis zur Grundplatte herausgelösten Bereichen wird ein Metall galvanisch abgeschieden. Die strukturierte Resistschicht wird mit Metall überdeckt und anschließend von der komplementär strukturierten Metallschicht getrennt. Die strukturierte Metallschicht dient als Formeinsatz zum Abformen vieler identischer Formteile.

Der erfindungsgemäße Sensor kann zum Nachweisen unterschiedlicher Gase verwendet werden, wie Kohlenwasserstoffe, Kohlenmonoxid, Kohlendioxid, Stickoxide, Ammoniak, Wasserdampf und andere. Die Gase können in reiner Form, als Gemische mit anderen Gasen, z. B. Luft, oder z. B. als Abgas einer Verbrennungsanlage vorliegen. Der aus Kunststoff gefertigte Sensor kann bis zu einer Gastemperatur benutzt werden, bis zu der der Kunststoff sich nicht verformt. Der aus einem Metall gefertigte Sensor kann auch bei höherer Gastemperatur benutzt werden.

Der erfindungsgemäße IR-spektrometrische Sensor für Gase hat folgende Vorteile:
- Der Sensor hat die hohe Auflösung des Gitterspektrometers; mit ihm können mehrere schmale Wellenlängenbereiche gleichzeitig erfaßt werden.
- Der Sensor hat eine hohe Selektivität.
- Das einstückige Formteil läßt sich mit den Verfahren der Mikrostrukturtechnik kostengünstig und in großer Stückzahl herstellen.
- Der Sensor ist kompakt, robust und präzise; er ist für harte Einsatzbedingungen und für transportable Geräte geeignet. Die größte Abmessung des Sensors beträgt im allgemeinen weniger als 5 cm.
- Der Sensor arbeitet im Bereich der normalen Raumtemperatur; in Metall-Ausführung ist er auch bei erhöhter Temperatur einsetzbar.
- Der Sensor ist für eine Vielzahl von Gasen geeignet. Er ist über lange Zeit verwendbar, verlangt einen nur geringen Wartungsaufwand und ist einfach zu bedienen.
- Mit dem Sensor kann man die Sicherheit von Anlagen, in denen brennbare, giftige oder andere Gase enthalten sind oder auftreten können oder aus solchen Anlagen austreten können, auf wirtschaftliche Weise erheblich erhöhen. Er kann im privaten und gewerblichen Sektor eingesetzt werden.

Der erfindungsgemäße Sensor wird anhand der Figuren näher erläutert.

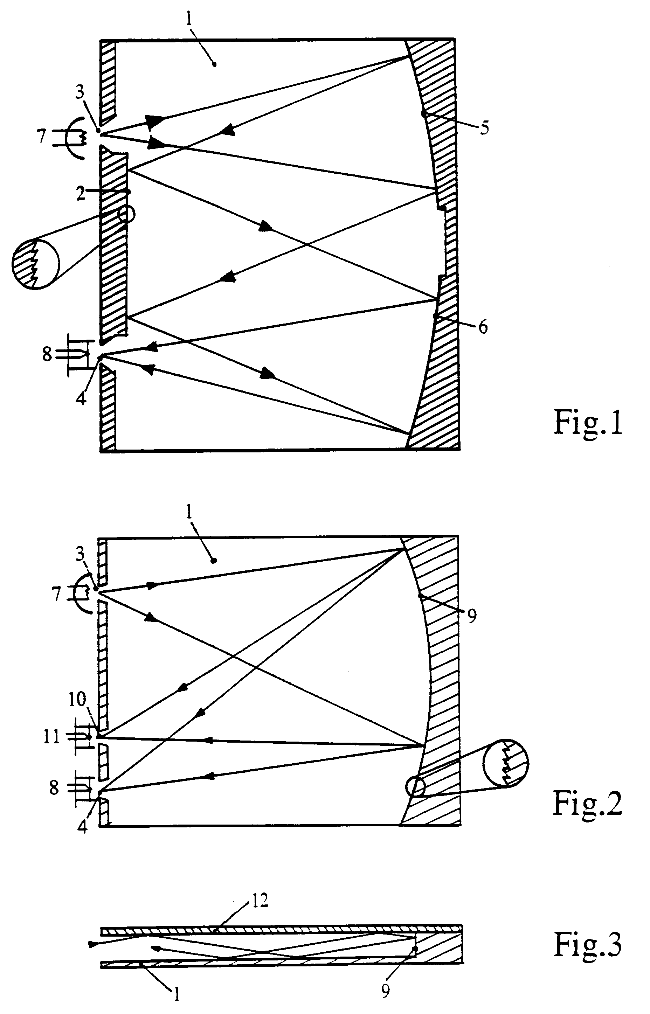

In Fig. 1 ist der Sensor in der Ansicht von der offenen Seite des freien Raumes dargestellt. Auf der Grundplatte (1) ist das plane Spiegelgitter (2) sowie der Spalt (3) zum Einkoppeln von polyfrequenter IR-Strahlung und der Spalt (4) zum Auskoppeln monofrequenter IR-Strahlung angebracht. Die beiden Hohlspiegel (5) und (6) liegen dem Spiegelgitter gegenüber. Zwischen dem Spiegelgitter (2) und den Hohlspiegeln (5) und (6) liegt der freie Raum, der das zu untersuchende Gas enthält. Die Längsseiten des freien Raumes sind offen. Auf der Außenseite des Einkoppelspalts (3) ist die IR-Strahlungsquelle (7) angebracht, auf der Außenseite des Auskoppelspalts (4) ist der IR-Strahlungsempfänger (8) angebracht. Bei dieser Ausführung liegen die wesentlichen optischen Elemente nicht auf dem Rowland-Kreis. Die in Fig. 1 schraffiert dargestellten Teile stehen oberhalb der Grundplatte hervor. Die Grundplatte (1) mit den darauf fest angeordneten Elementen (2) bis (6) bilden das einstückige Formteil.

Mittels der beiden Hohlspiegel wird der IR-Strahl innerhalb des freien Raumes reflektiert, um den Weg des IR-Strahls durch das Gas zu verlängern.

In Fig. 2 ist eine weitere Ausführungsform des Sensors ebenfalls in der Ansicht von der offenen Seite des freien Raumes dargestellt. Den Spalten (3) und (4) gegenüber ist das konkave Spiegelgitter (9) angebracht. Neben dem Spalt (4) liegt der Spalt (10) zum Auskoppeln einer monofrequenten IR-Strahlung mit einer anderen Wellenlänge als beim Spalt (4). Auf der Außenseite des Spalts (10) liegt ein weiterer Strahlungsempfänger (11). Mit einem der beiden Strahlungsempfänger (8) und (11) wird eine Wellenlänge empfangen, die von dem Gas absorbiert wird. Mit dem anderen Strahlungsempfänger wird eine Referenz-Wellenlänge empfangen, die von dem Gas nicht absorbiert wird.

Fig. 3 zeigt einen Längsschnitt durch den Sensor. Der freie Raum ist mit der Abdeckplatte (12) abgedeckt. Die von der IR-Strahlungsquelle kommende Strahlung wird an den Wänden des freien Raumes mehrfach reflektiert.

### Beispiel 1: IR-spektrometrischer Sensor für brennbare Gase

Brennbare Kohlenwasserstoffe wie Methan, Ethan, Propan und Butan absorbieren IR-Strahlung im Bereich um 3,38 µm (2 960 cm⁻¹) Zum Nachweis von Methan in Luft wird ein erfindungsgemäßer IR-spektrometischer Sensor benutzt.

Der Sensor entsprechend Fig. 2 ist etwa 25 mm lang und etwa 20 mm breit. Der freie Raum ist etwa 500 µm hoch. Die Innenseite des in LIGA-Technik hergestellten einstückigen Formteils aus Polymethylmethacrylat und die Innenseite der Abdeckplatte aus Polymethylmethacrylat sowie das Spiegelgitter sind vergoldet. Das Spiegelgitter hat 200 Linien/mm; der Blazewinkel ist angepaßt an die maximale Reflexion dieses Spiegelgitters im Bereich 3,3 µm (3 030 cm⁻¹) in erster Beugungsordnung.

Der etwa 0,4 mm breite Eintrittsspalt des Spektrometers wird mit einer schmalbandigen gepulsten IR-Leuchtdiode aus InGaAs beleuchtet; deren maximale Strahlungsstärke liegt bei 3,4 µm (2 940 cm⁻¹) mit einer Halbwertsbreite von etwa 0,4 µm (etwa 350 cm⁻¹). Die vom Gitter reflektierte Strahlung wird auf zwei etwa 0,4 mm breite Spalte gerichtet; ein Spalt liegt an der Stelle, an dem die Wellenlänge 3,3 µm (3 030 cm⁻¹) erscheint, der andere liegt an der Stelle, an der die Wellenlänge 2,78 µm (3 600 cm⁻¹) erscheint. Diese Wellenlänge wird weder von Methan noch von Luft nennenswert absorbiert. Hinter jedem Austrittsspalt ist ein Bleiselenid-Strahlungsempfänger angebracht.

Der Eintrittsspalt, die beiden Austrittsspalte und die Mitte des Spiegelgitters liegen auf einem Rowland-Kreis mit 11 mm Radius. Der Krümmungsradius des Spiegelgitters beträgt 22 mm.

Die Wellenlänge 3,3 µm (3 030 cm⁻¹) ist die Meßwellenlänge, die Wellenlänge 2,78 µm (3 600 cm⁻¹) ist die Referenz-Wellenlänge. Mittels der Referenz-Wellenlänge werden Störeinflüsse wie Temperaturschwankungen sowie kurzzeitige und langzeitige Veränderungen der Strahlungsstärke der IR-Leuchtdiode erfaßt und beim Auswerten der Intensität des Meßsignals berücksichtigt.

Durch den als Gasküvette benutzten freien Raum des Sensors strömt unter Druck stehendes Gas mit einem Durchsatz von etwa 10 cm³/h. Das Gas besteht im wesentlichen aus Luft und kann zeitweise Methan enthalten.

Sobald das Gas Methan enthält, wird die vom Strahlungsempfänger bei 3,38 µm (2 960 cm⁻¹) empfangene Intensität gemäß dem Extinktionsgesetz mit steigender Konzentration von Methan kleiner.

Mit diesem Sensor lassen sich Methananteile in Luft, die etwa 10 % der Konzentration des Methan-haltigen zündfähigen Gemisches ausmachen, also etwa 5 % Methan in Luft, quasi-kontinuierlich erfassen. Damit kann man Lecks in gasbetriebenen Anlagen nachweisen.

### Beispiel 2: IR-spektrometrischer Sensor für das Abgas einer Verbrennungsanlage

Das Abgas einer Verbrennungsanlage enthält neben Stickstoff, Sauerstoff, Kohlendioxid und Wasserdampf noch Kohlenmonoxid, unverbrannte Kohlenwasserstoffe und Stickoxide. Ein kalter Teilstrom des Abgases wird durch einen erfindungsgemäßen Sensor geleitet und quasi-kontinuierlich analysiert.

Der Sensor ist ähnlich zu dem in Beispiel 1 verwendeten Sensor aufgebaut. Als IR-Strahlungsquelle mit breitem Spektralbereich wird ein thermischer Strahler (NiCr-Draht) verwendet. Ein Teil des in den freien Raum geleiteten Abgases strömt an der IR-Strahlungsquelle vorbei. Dadurch wird die Strahlungsquelle gekühlt und die Strömung des Abgases durch den freien Raum unterstützt. Der Sensor enthält jedoch einen etwa 8 mm breiten Austrittsspalt an der Stelle des Rowland-Kreises, an welcher der Wellenlängenbereich von 2,5 µm bis 7,7 µm (von 4 000 cm⁻¹ bis 1 300 cm⁻¹) erscheint. Hinter diesem Austrittsspalt sind 64 Thermosäulen nebeneinander angeordnet, die jeweils 120 µm breit und etwa 1 mm hoch sind. Die wirksame Fläche jeder Thermosäule ist 100 µm breit und 400 µm hoch. Mit diesen zeilenartig angeordneten Strahlungsempfängern wird die Intensität von jeweils etwa 80 nm breiten Bändern des auf der Empfängerzeile liegenden Wellenlängenbereichs gleichzeitig gemessen. Aus der Verteilung der Intensität dieser 64 Signale werden die Anteile der im Abgas enthaltenen Gase Kohlenmonoxid, Kohlenwasserstoffe und Stickoxide quasi-kontinuierlich ermittelt. Nach Kenntnis der Konzentration dieser Gase im Abgas wird die Arbeitsweise der Verbrennungsanlage optimiert.

### Beispiel 3: IR-spektrometrischer Sensor mit integrierten Zusatzteilen

Der Sensor enthält das einstückige Formteil entsprechend Fig. 2. Auf der Außenseite des Eintritts- und Austrittsspalts enthält das Formteil einen Hohlraum mit beschichteten Wänden zur Strahlungskonversion innerhalb des betrachteten Wellenlängenbereiches.

Die Abdeckplatte für den freien Raum besteht aus einer Silizium-Platte, die ein Dünnschicht-Widerstands-Heizelement zum Erzeugen der IR-Strahlung sowie mehrere Thermosäulen als Strahlungsempfänger enthält. Diese Abdeckplatte enthält weiter mehrere Vorverstärker zum Verstärken der Signale des Strahlungsempfängers und eine elektronische Schaltung zum Auswerten und Verarbeiten der Signale sowie elektronische Elemente zum Ansteuern der IR-Strahlungsquelle. Strahlungsquelle und Strahlungsempfänger sind an den Stellen der Abdeckplatte angeordnet, die bei auf das einstückige Formteil aufgesetzter Platte über den Hohlräumen vor dem Eintritts- und Austrittsspalt liegen.

Die von oben in den Hohlraum vor dem Eintrittsspalt eintretende Strahlung wird von den Wänden des Hohlraums absorbiert, isotrop abgestrahlt und tritt durch den Eintrittsspalt in den freien Raum des Spektrometers ein. Die Strahlung wird also um 90 Grad umgelenkt.

Die durch den Austrittsspalt in den Hohlraum vor dem Austrittsspalt eintretende vom Spiegelgitter reflektierte Strahlung wird von den Wänden dieses Hohlraums absorbiert, isotrop abgestrahlt und trifft auf den Strahlungsempfänger.

## Patentansprüche

1. Infrarot-spektrometrischer Sensor für Gase, gekennzeichnet durch
- ein als Mikrostrukturkörper hergestelltes einstückiges Formteil, das aus einer Grundplatte, einem Spiegelgitter und einem Anschluß zum Einkoppeln von polyfrequenter IR-Strahlung sowie mindestens einem Anschluß zum Auskoppeln monofrequenter IR-Strahlung besteht,
- einen freien Raum, der das zu untersuchende Gas enthält, zwischen dem Spiegelgitter und den Anschlüssen für die IR-Strahlung,
- eine Abdeckplatte über dem freien Raum, die mit dem Formteil dicht verbunden ist,
- Öffnungen zum Ein- und Ausleiten des Gases in den bzw. aus dem freien Raum.

2. IR-spektrometrischer Sensor nach Anspruch 1,
gekennzeichnet durch
- ein konkaves Reflexionsgitter als Spiegelgitter.

3. IR-spektrometrischer Sensor nach den Ansprüchen 1 und 2,
gekennzeichnet durch
- ein konkaves Echelettegitter mit angepaßtem Blazewinkel als Spiegelgitter.

4. IR-spektrometrischer Sensor nach den Ansprüchen 1 bis 3,
gekennzeichnet durch
- ein Formteil, bei dem das Spiegelgitter sowie die Anschlußstellen für die IR-Strahlung auf dem Rowland-Kreis oder auf einer Kurve, die in der Nähe des Rowland-Kreises liegt, angeordnet sind.

5. IR-spektrometrischer Sensor nach den Ansprüchen 1 bis 4,
gekennzeichnet durch
- einen freien Raum, dessen Wände ebenso wie die dem freien Raum zugewandte Seite der Abdeckplatte mit einer metallenen Schicht bedeckt sind, die die IR-Strahlung reflektiert.

6. IR-spektrometrischer Sensor nach den Ansprüchen 1 bis 5,
gekennzeichnet durch
- Spalte, Blenden sowie Haltestrukturen oder Justierstrukturen für die Strahlungsquelle und den Strahlungsempfänger.

7. IR-spektrometrischer Sensor nach den Ansprüchen 1 bis 6,
gekennzeichnet durch
- weitere optische Elemente wie Planspiegel, Hohlspiegel, Linsen oder Prismen, die entweder direkt in das Formteil integriert sind, oder in entsprechende Aussparungen im Formteil eingelegt sind.

8. IR-spektrometrischer Sensor nach den Ansprüchen 1 bis 7,
gekennzeichnet durch
- einen oder mehrere in das Formteil integrierte zylindrische Hohlspiegel, mit denen der Weg der IR-Strahlung innerhalb des freien Raumes verlängert wird.

9. IR-spektrometrischer Sensor nach den Ansprüchen 1 bis 8,
gekennzeichnet durch
- ein einstückiges Formteil, das aus Kunststoff (wie Polymethylmethacrylat, Polysulfon, Polycarbonat) oder aus Metall (wie Nickel, Nickel-Kobalt, Gold, Kupfer) besteht.

10. IR-spektrometrischer Sensor nach den Ansprüchen 1 bis 9,
gekennzeichnet durch
- einen die IR-Strahlung leitenden Lichtwellenleiter, mit dem die IR-Strahlungsquelle an das Formteil angeschlossen ist.

11. IR-spektrometrischer Sensor nach den Ansprüchen 1 bis 10,
gekennzeichnet durch
- einen oder mehrere IR-Strahlung leitende Lichtwellenleiter, mit denen die IR-Strahlungsempfänger an das Formteil angeschlossen sind.

12. IR-spektrometrischer Sensor nach den Ansprüchen 1 bis 11,
gekennzeichnet durch
- ein einstückiges Formteil, das mit einem Halbleitersubstrat fest verbunden ist, auf dem eine IR-Strahlungsquelle, ein oder mehrere IR-Strahlungsempfänger und gegebenenfalls elektronische Elemente zum Verstärken der Signale des Strahlungsempfängers sowie zum Auswerten des IR-Spektrums angeordnet sind.

13. Verwenden des IR-spektrometrischen Sensors nach den Ansprüchen 1 bis 12
- zum Nachweisen eines einzelnen Gases, vorzugsweise gasförmiger Kohlenwasserstoffe (wie Methan, Ethan, Propan, Butan) oder Kohlendioxid, Kohlenmonoxid, Stickoxid, Wasserdampf, Ammoniak, in einem Gasgemisch.

14. Verwenden des IR-spektrometrischen Sensors nach den Ansprüchen 1 bis 12
- zur quantitativen Analyse von Gasen oder Gasgemischen.
